# EUROPÄISCHE PATENTSCHRIFT

(11) **EP 1 479 493 B1**
(45) Veröffentlichungstag und Bekanntmachung des Hinweises auf die Patenterteilung: **04.04.2007**
(21) Anmeldenummer: 04006293.7
(22) Anmeldetag: 17.03.2004
(51) Int. Cl.: B27D 5/00, B23Q 35/10, B23Q 37/00

(54) **Bearbeitungsaggregat mit vertikaler Arbeitsspindel für eine Holzbearbeitungsmaschine**
Machining unit with vertical spindle for a wood-working machine
Unité d'usinage avec broche verticale pour travailler le bois

(30) Priorität: 23.05.2003 DE 10323907
(43) Veröffentlichungstag der Anmeldung: 24.11.2004
(73) Patentinhaber: IMA Klessmann GmbH Holzbearbeitungssysteme, 32312 Lübbecke (DE)
(72) Erfinder: Rose, Martin Ing. (grad.), 32339 Espelkamp (DE); Schürmann, Ralf, 32351 Stemwede (DE)
(74) Vertreter: Elbertzhagen, Otto

(56) Entgegenhaltungen:
- DE-A1- 4 113 543
- US-A- 3 642 040
- US-A- 5 727 913

## Beschreibung

Die Erfindung bezieht sich auf ein Bearbeitungsaggregat der im Oberbegriff des Patentanspruchs 1 näher bezeichneten Art (siehe beispielsweise US-A-5 727 913).

Solche Bearbeitungsaggregate werden für die Kantenund/oder Oberseitenbearbeitung an plattenförmigen Werkstücken verwendet, wobei insbesondere eine Kantenprofilierung am Rand oder in der Oberseite der Werkstücke, das Anfahren eines Kantenbandes an Werkstückkanten und das Besäumen des Kantenbandes in Betracht kommt. Besondere Probleme sind dann zu überwinden, wenn die Kantenprofilierung der Werkstücke Rundungen, Wellungen oder ähnliche Oberflächenwölbungen aufweist, weil dann schon Höhendifferenzen der zu bearbeitenden Kante im 1/10-mm-Bereich ausgeglichen werden müssen, um unsaubere Übergänge zwischen dem Kantenmaterial und der Werkstückoberfläche zu vermeiden.

Bearbeitungsaggregate der vorgenannten Art werden deshalb im sogenannten Tastbetrieb eingesetzt, bei dem sich das Aggregat unter einem vorgegebenen Tastdruck über die Tastvorrichtung auf der Werkstückoberseite nahe der zu bearbeitenden Kante abstützt. In bekannter Ausführung besteht die Tastvorrichtung aus einem geschlossenen Ring, der das in die Werkzeugaufnahme der Arbeitsspindel eingesetzte Bearbeitungswerkzeug koaxial umgibt. Bearbeitungswerkzeuge dieser Art sind spezielle Formfräser, die entsprechend den unterschiedlichen Werkstückkonturen verschieden sind. Für jeden dieser unterschiedlichen Formfräser bedarf es deshalb einer unterschiedlichen Justage des Bearbeitungsaggregates in der sogenannten Z-Achse, die der Achse der Arbeitsspindel entspricht, die durch die Tastvorrichtung vorzunehmen ist. Um hohe Genauigkeiten bei der Werkstückkantenbearbeitung zu erzielen, verwendet man für jeden Fräsertyp verschiedene Tastringe als Tastvorrichtungen.

Diese Tastringe sind nicht nur aufwendig, sie sind auch störend, wenn es darum geht, das Bearbeitungsaggregat ohne Umrüstung für anderweitige spangebende Bearbeitungen einzusetzen. Ein weiterer Nachteil der Tastringe ist, daß sich beim geschweiften Kantenverlauf, beim Überfahren von Plattenecken oder engen Biegungen der Tastpunkt entlang dem Umfang der Tastringe verlagert. Dadurch erfolgt die Höhenabtastung der Werkstückoberseite nicht stets am nächstmöglichen Punkt des Werkzeugeingriffs. Oft läuft der Tastpunkt demgegenüber vor oder nach, dementsprechend können sich Bearbeitungsungenauigkeiten ergeben, wenn zwischen der Stelle der Abtastung und der Stelle des Werkzeugeingriffs ein Höhenunterschied besteht.

Der Erfindung liegt die Aufgabe zugrunde, ein Bearbeitungsaggregat der eingangs genannten Art zu schaffen, welches zum einen eine genauere Abtastung der Werkstückoberseiten ermöglicht und zum anderen das Bearbeitungsaggregat universeller einsetzbar macht.

Diese Aufgabe wird bei einem Bearbeitungsaggregat mit den Merkmalen des Patentanspruchs 1 gelöst.

Für das erfindungsgemäße Bearbeitungsaggregat ist wesentlich, daß der Tastfinger an der separat angetriebenen Drehachse angeordnet ist. Unter Drehachse ist hier nicht eine virtuelle Rotationsachse sondern eine Achse im Sinne eines Bauteils zu verstehen. So ist die Drehachse im vorliegenden Fall ein koaxial zur Rotationsachse der Arbeitsspindel schwenkbarer Körper. An den Aufnahmevorrichtungen der Drehachse und an der Werkzeugaufnahme der Arbeitsspindel können zugleich sogenannte Adapterwerkzeuge angekuppelt werden, die sowohl einen Drehantrieb als auch einen Schwenkantrieb erfordern. Dies ist unter anderem bei Winkelbohrgeräten oder Kreissägen der Fall. In gleicher Weise wie diese Adapterwerkzeuge kann der Tastfinger um die Achse der Arbeitsspindel geschwenkt werden, was für den praktischen Betrieb insbesondere bei der Kantenbearbeitung eines Werkstücks bedeutet, daß immer der geringstmögliche Abstand zwischen dem Tastpunkt des Tastfingers und der Stelle des Werkzeugeingriffs eingestellt werden kann. Bei einer programmgesteuerten Maschine wird dies mit im Bearbeitungsprogramm vorgesehen und die Drehachse mit dem daran angeordneten Tastfinger entsprechend verstellt.

Zum zweiten ermöglicht es die Schwenkbarkeit des Tastfingers ohne Umrüstung die sogenannten Adapterwerkzeuge an dem Bearbeitungsaggregat verwenden zu können, indem der Tastfinger aus seiner nach unten hin ausgelenkten Endlage in die seitlich von der Arbeitsspindel wegstehende Position geschwenkt wird, in der er die Beweglichkeit der Adapterwerkzeuge insbesondere bei der Schwenkbewegung durch die Drehachse nicht stört. Insbesondere kann der Tastfinger in Relation zu den Aufnahmevorrichtungen für die Adapterwerkzeuge so angeordnet sein, daß er bei angekuppeltem Adapterwerkzeug sich nicht an dessen Auslegerseite befindet.

Vorteilhafte Ausgestaltungsmerkmale der Erfindung ergeben sich aus den Unteransprüchen.

Die Erfindung wird nachfolgend anhand der Zeichnung an einem Ausführungsbeispiel noch näher erläutert. Dabei zeigen:
- Fig. 1: die Frontansicht eines Bearbeitungsaggregates einer Holzbearbeitungsmaschine in der Bestückung mit einem Formfräser,
- Fig. 2: eine Seitansicht des Bearbeitungsaggregates nach Fig. 1 jedoch mit der Bestückung eines Adapterwerkzeuges und
- Fig. 3 - 6: in vergrößerter Darstellung die in Fig. 1 eingekreiste Einzelheit in vier verschiedenen Positionen des Tastfingers der Tastvorrichtung des Bearbeitungsaggregates.

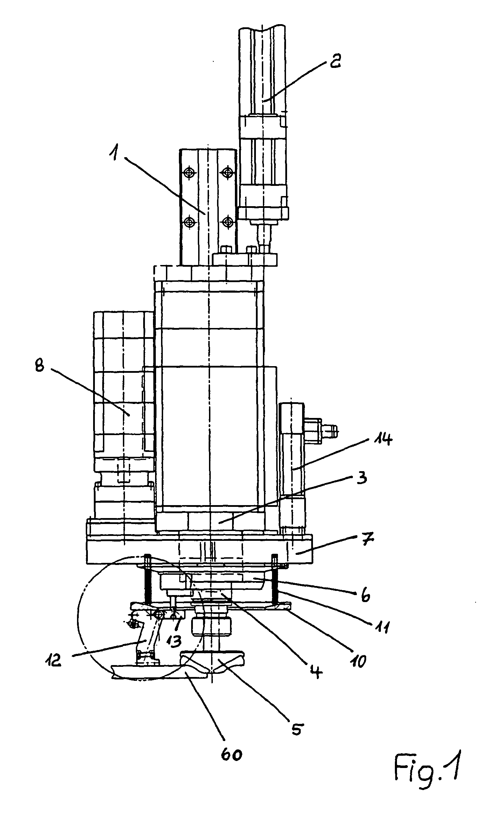

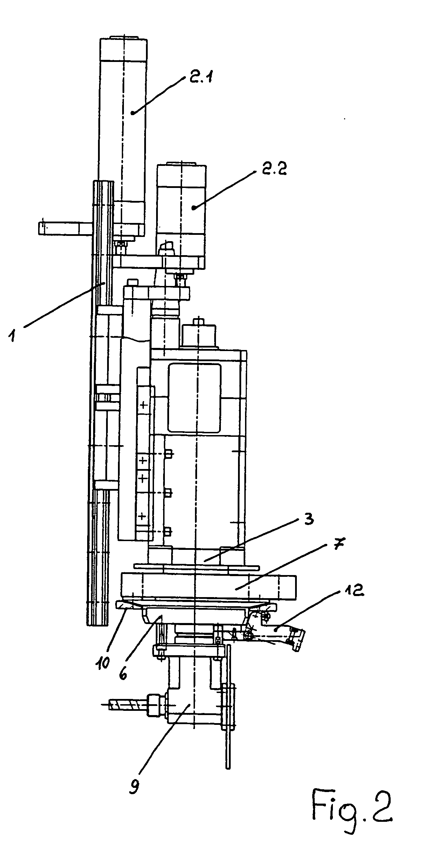

Im einzelnen zeigt Fig. 1 eine Vertikalführung 1 an einer CNC-gesteuerten Holzbearbeitungsmaschine, die im einzelnen nicht dargestellt ist. An dieser Vertikalführung 1 ist das gesamte in den Figuren 1 und 2 wiedergegebene Bearbeitungsaggregat schwimmend aufgehängt, und dazu dienen zwei Pneumatikzylinder 2.1 und 2.2. Aufgabe der Zylinder 2 ist es, das Gewicht des Bearbeitungsaggregates weitestgehend zu kompensieren, sofern im Tastbetrieb gearbeitet wird, worauf nachstehend noch eingegangen wird.

Das Bearbeitungsaggregat hat eine Arbeitsspindel 3, bei der es sich um eine sogenannte Motorspindel handelt, bei der die Arbeitsspindel zugleich die Motorwelle ist. Am unteren Ende der Arbeitsspindel 3 befindet sich eine Werkzeugaufnahme 4, welche die sogenannte Werkzeugschnittstelle darstellt. In der Regel handelt es sich bei den modernen Bearbeitungsaggregaten um eine Hohlschaftkegelaufnahme. In die Werkzeugaufnahme 4 ist, soweit es Fig. 1 betrifft, ein Formfräser 5 eingesetzt. Damit werden vornehmlich die Kanten eines plattenförmigen Werkstücks 60 bearbeitet, das auf einem in der Zeichnung nicht dargestellten Maschinentisch fest aufgespannt ist. Der dargestellte Formfräser 5 hat konkavkonvex geschwungene Schneiden, deren Negativprofil sich entlang der Werkstückkanten bei dessen Umfahren abbildet. Da die Werkstücke 60 im Randbereich an ihren Oberseiten aufgrund der Werkstücktoleranzen und anderer Einflüsse unterschiedliche Höhenlagen haben, also Erhebungen oder Mulden aufweisen, die in Längsrichtung der Werkstückkanten aufeinanderfolgen, muß der Fräser 5 diesen Höhendifferenzen nachfolgen. Deshalb stützt sich das gesamte Bearbeitungsaggregat im Tastbetrieb mit dem Tastdruck auf der Werkstückoberseite ab, der insbesondere mit Hilfe des Zylinders 2.2 eingestellt wird.

Koaxial zur Arbeitsspindel 3 weist das Bearbeitungsaggregat eine Drehachse 6, nämlich einen drehverstellbaren Aufnahmekörper auf, der in einem ringförmigen Aufnahmeflansch 7 gelagert ist. Die Drehung oder Schwenkung der Drehachse 6 erfolgt koaxial zur Achse der Arbeitsspindel 3. Dazu sitzt am Aufnahmeflansch 7 ein Antriebsmotor 8, der mit einem Abtriebsritzel in eine Außenverzahnung des Aufnahmeflansches 7 eingreift. Die Drehachse 6 hat in der Zeichnung nicht näher dargestellte Aufnahmevorrichtungen für sogenannte Adapterwerkzeuge 9, von denen eines in Fig. 2 dargestellt ist. Dieses Winkelbohrgerät benötigt sowohl einen Drehantrieb für den Bohrer als auch einen Schwenkantrieb, um die Richtung der Bohrachse vorgeben zu können.

Wie weiter aus Fig. 1 hervorgeht, ist unterseitig am Aufnahmeflansch 7 ein Stellring 10 angeordnet, der nach unten hin vom Aufnahmeflansch 7 weg ausgefahren sowie zum Aufnahmeflansch 7 nach oben hin zurückgefahren werden kann. Dazu dienen Hubspindeln 11, die über ein Getriebe mit einem Hilfsantrieb 14 verbunden sind, der ebenfalls auf dem Aufnahmeflansch 7 angeordnet ist.

Der Stellring 10 wirkt mit einem Tastfinger 12 zusammen, der schwenkbar mittels einer Mitnehmerlasche 13, die sich an der Unterseite der Drehachse 6 in radialer Richtung erstreckt, an der Drehachse angelenkt ist. In der nach unten voll ausgelenkten Lage des Tastfingers 12, die in Fig. 1 wiedergegeben ist, stützt sich das gesamte Bearbeitungsaggregat - wie vorstehend erwähnt-auf der Oberseite des Werkstücks 60 mit dem Tastdruck ab.

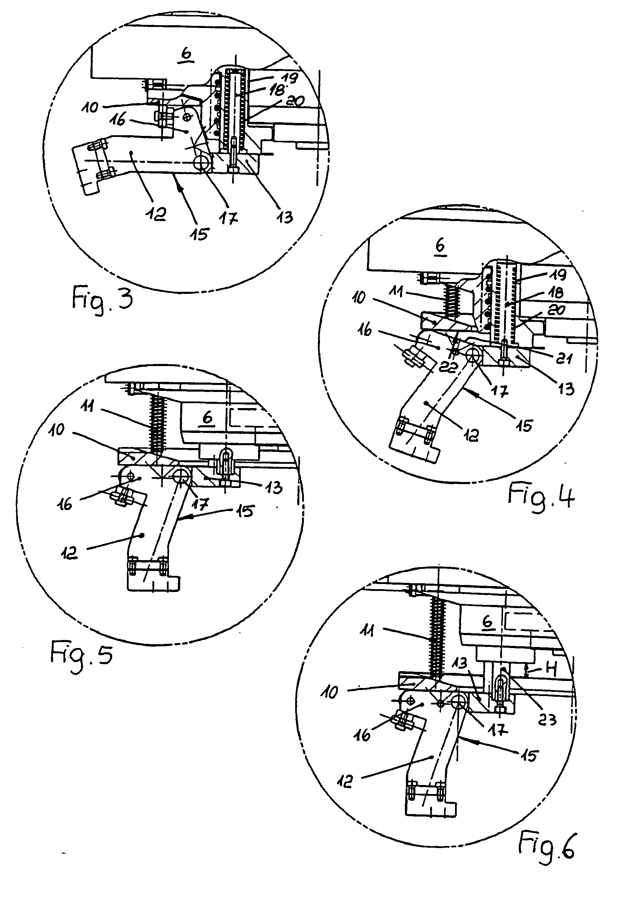

Die Kinematik des schwenkbaren Tastfingers 12 ergibt sich aus den Figuren 3 - 6. Fig. 3 zeigt diejenige Lage, die der Tastfinger 12 einnimmt, wenn das Bearbeitungsaggregat nicht im Tastbetrieb arbeitet. Dies ist u.a. bei Verwendung eines Adapterwerkzeugs 9, wie in Fig. 2 dargestellt, der Fall. Bezogen auf die Rotationsachse der Arbeitsspindel 3 oder der Schwenkachse der Drehachse 6 ist der Tastfinger 12 in radialer Richtung nach außen weggeschwenkt. Zugleich ist der Stellring 10 in seine oberste Position an der Unterseite der Drehachse 6 verfahren. Um über den Vertikalhub des Stellringes 10 eine Schwenkbewegung auf den Tastfinger 12 übertragen zu können, ist der Tastfinger 12 Teil eines L-förmig abgewinkelten Hebels 15, bei dem es sich um einen zweiarmigen Hebel handelt, dessen einer Arm der Tastfinger 12 ist. Der davon abgewinkelte zweite Hebelarm 16 stützt sich so an der Unterseite des Stellringes 10 unter der Kraft einer nicht näher dargestellten Feder ab, daß bei jeder Hubbewegung des Stellringes 10 eine Drehbewegung auf den Hebel 15 und damit auf den Tastfinger 12 übertragen wird. Dementsprechend ist im Bereich der Abwinklung des doppelarmigen Hebels 15 eine Gelenkachse 17 angeordnet, die an dieser Stelle den Hebel 15 durchquert und ihn mit der unterseitig an der Drehachse 6 befindlichen Mitnehmerlasche 13 gelenkig verbindet.

Wir der Stellring 10 nach unten hin verfahren, ergibt sich eine Zwischenposition, die in Fig. 4 dargestellt ist. Man erkennt hier, daß durch Druck des Stellrings 10 auf den Hebelarm 16 der Hebel 15 entgegen dem Uhrzeigersinn verschwenkt worden ist, wobei sich der Tastfinger 12 nach unten hin bewegt hat. Bei Fortsetzung der Abwärtsbewegung des Stellringes 10 wird die in Fig. 5 dargestellte Position erreicht. Ab dieser Stellung liegt der Hebel 16 mit einer ebenen Außenseite 21 an der ebenen Unterseite 22 des Stellringes 10 an, wodurch bei der weiteren Abwärtsbewegung des Stellringes 10 kein weiteres Schwenkmoment auf den Hebel 15 übertragen wird. Somit hat ab dieser Position der Tastfinger 12 seine nach unten ausgelenkte Lage erreicht.

Fig. 6 macht deutlich, daß bei der nach unten ausgerichteten Position des Tastfingers 12 der Stellring 10 noch weiter nach unten hin verfahren werden kann, weil nämlich die Mitnehmerlasche 13 an der Drehachse 6 bei unterbleibender Schwenkung des Hebels 15 auf dem weiteren Weg des Stellringes 10 bis zu dessen unterer Endlage mitgenommen wird.

Dazu wird die Mitnehmerlasche 13 von einem Zugbolzen 18 gehalten, der in einer Vertikalbohrung 19 an der Unterseite der Drehachses 6 axial verschieblich angeordnet ist. Von einer umgebenden Druckfeder 20 ist der Zugbolzen 18 derart beaufschlagt, daß er bestrebt ist, unter Mitnahme der Mitnehmerlasche 13 sich in die Bohrung 19 hineinzuziehen. Diese spezielle Anordnung der Mitnehmerlasche 13 an dem Zugbolzen 18 ist in den Figuren 3 und 4 dargestellt. Parallel zu dem Zugbolzen 18 sind Führungsbolzen 23 vorhanden, von denen einer in Fig. 6 erkennbar ist. Diese Führungsbolzen 23 sichern ein verschwenkfreies Führen der Mitnehmerlasche 13 bei deren Aufwärts- oder Abwärtsbewegung.

Es versteht sich, daß beim Anheben des Stellringes 10 aus der in Fig. 6 gezeigten Lage heraus der doppelarmige Hebel 15 zunächst mitgenommen wird, ohne sich zu verschwenken. Der Beginn der Schwenkbewegung wird erst ab demjenigen Punkt des Verfahrweges des Stellringes 10 erreicht, bei dem die Mitnehmerlasche 13 an der Unterseite der Drehachse 6 anliegt und von dem Zugbolzen 18 nicht weiter nach oben hin mitgenommen werden kann.

In der gestreckten, nach unten ausgelenkten Lage kann somit der Tastfinger 12 einen in Fig. 6 angedeuteten Hub H ausführen, der über die Betätigung des Stellringes gesteuert wird. Dies ermöglicht im Tastmodus des Bearbeitungsaggregates, die Höhenlage des gesamten Bearbeitungsaggregates auf das jeweils individuelle Fräswerkzeug 5 optimal einstellen zu können.

## Patentansprüche

1. Bearbeitungsaggregat mit einer in vertikaler Richtung schwimmenden Aufhängung an einer programmgesteuerten Holzbearbeitungsmaschine, das eine vertikale Arbeitsspindel (3) und nahe deren Werkzeugaufnahme (4) eine Tastvorrichtung aufweist, über welche das Aggregat auf der Oberseite der zu bearbeitenden Werkstücke (60), die auf einem Bearbeitungstisch aufgespannt sind, unter einem Tastdruck abgestützt und bei der Kanten- und/oder Oberseitenbearbeitung den Höhentoleranzen der Werkstücke nachgeführt wird,
**dadurch gekennzeichnet,**
**daß** im Bereich der Werkzeugaufnahme (4) koaxial zur Arbeitsspindel (3) eine separat angetriebene Drehachse (6) mit Aufnahmevorrichtungen für einen Dreh- und einen Schwenkantrieb benötigende Adapterwerkzeuge (9) angeordnet und an dieser Drehachse (6) als Tastvorrichtung ein Tastfinger (12) angelenkt ist, der von einer nach unten hin vorstehenden, ausgelenkten Lage in eine von der Werkzeugaufnahme (4) der Arbeitsspindel (3) seitlich wegstehende Position schwenkbar ist.

2. Bearbeitungsaggregat nach Anspruch 1,
**dadurch gekennzeichnet,**
**daß** die Drehachse (6) in einem ringförmigen Aufnahmeflansch (7) gelagert ist, an welchem ein nach unten hin verfahrbarer Stellring (10) koaxial angeordnet ist, an dem sich der Tastfinger (12) federnd abstützt und dessen Hubbewegung den Tastfinger (12) so steuert, daß in der oberen Endlage des Stellringes (10) der Tastfinger (12) seitlich wegsteht und in der unteren Endlage nach unten hin ausgelenkt ist.

3. Bearbeitungsaggregat nach Anspruch 2,
**dadurch gekennzeichnet,**
**daß** der Stellring (10) mittels Hubspindeln (11) mit dem Aufnahmeflansch (7) verbunden ist, die von einem Stellmotor (14) antreibbar sind, der am Aufnahmeflansch (7) angeordnet ist.

4. Bearbeitungsaggregat nach Anspruch 2 oder 3,
**dadurch gekennzeichnet,**
**daß** der Tastfinger (12) den einen Arm eines doppelarmigen, L-förmig abgewinkelten Hebels (15) bildet, dessen zweiter Arm (16) mittels einer Feder in Anlage an der Unterseite des Stellringes (22) gehalten ist.

5. Bearbeitungsaggregat nach Anspruch 4,
**dadurch gekennzeichnet,**
**daß** an der Drehachse (6) eine in radialer Richtung sich erstreckende Mitnehmerlasche (13) befestigt ist, an deren Außenende der L-förmige Hebel (15) mittels einer ihn im Bereich seiner Abwinklung durchquerenden Gelenkachse (17) angelenkt ist.

6. Bearbeitungsaggregat nach einem der Ansprüche 2 - 5,
**dadurch gekennzeichnet,**
**daß** die Anlenkstelle des Tastfingers (12) an der Drehachse (6) ab dem Punkt auf dem Hubweg des Stellringes (10) nach unten hin, bei dem der Tastfinger (12) die nach unten ausgeschwenkte Endlage erreicht hat, über den weiteren Weg des Stellringes (10) bis zu dessen unterer Endlage sowie entsprechend zurück mitgenommen wird.

7. Bearbeitungsaggregat nach Anspruch 5 und 6,
**dadurch gekennzeichnet,**
**daß** die Mitnehmerlasche (13) an der Drehachse (6) in achsparalleler Richtung verschiebbar ist.

8. Bearbeitungsaggregat nach Anspruch 7,
**dadurch gekennzeichnet,**
**daß** die Mitnehmerlasche (13) mittels zumindest eines druckfederbelasteten Zugbolzens (18), der in einer unterseitig offenen Vertikalbohrung (19) der Drehachse (6) angeordnet ist, gehalten ist.

## Claims

1. Machining unit with a vertically floating suspension on a program-controlled wood-working machine which has a vertical work spindle (3) and close to its tool holder (4) a sensor device by means of which the unit is supported under a sensor pressure on the upper side of the workpieces (60) which are to be machined and which are clamped on a machining table and through which when machining the edges and/or top sides the unit tracks the vertical tolerances of the workpieces,
**characterised in that**
in the region of the tool holder (4) coaxial with the work spindle (3) there is a separately driven rotational axis (6) with socket devices for adapter tools (9) which require a rotational and a pivotal drive and at this rotational axis (6) there is connected as a sensor device a sensor finger (12) which can pivot from a downwardly projecting deflected position into a position protruding sideways from the tool holder (4) of the work spindle (3).

2. Machining unit according to claim 1,
**characterised in that**
the rotational axis (6) is mounted in a ring-shaped socket flange (7) on which a downwardly movable adjusting ring (10) is coaxially mounted on which the sensor finger (12) is resiliently supported and whose lift movement controls the sensor finger (12) so that in the upper end position of the adjusting ring (10) the sensor finger (12) protrudes sideways and in the lower end position it is deflected downwards.

3. Machining unit according to claim 2,
**characterised in that**
the adjusting ring (10) is connected to the socket flange (7) by means of lift spindles (11) which are drivable by a servo motor (14) which is mounted on the socket flange (7).

4. Machining unit according to claim 2 or 3,
**characterised in that**
the sensor finger (12) forms the one arm of a double-armed L-shaped angled lever (15) whose second arm (16) is held by means of a spring in contact against the underneath of the adjusting ring (22).

5. Machining unit according to claim 4,
**characterised in that**
a radially extending entrainment plate (13) is fixed on the rotational axis (6) and the L-shaped lever (15) is fixed to the outer end of same by means of an articulation axis (17) which passes through same in the region of its angled corner.

6. Machining unit according to one of claims 2 to 5,
**characterised in that**
the connection point of the sensor finger (12) on the rotational axis (6) is entrained from the point on the lift path of the adjusting ring (10) downwards where the sensor finger (12) has reached the downwardly pivoted end position, over the further path of the adjusting ring (10) to its lower end position and correspondingly back again.

7. Machining unit according to claims 5 and 6,
**characterised in that**
the entrainment plate (13) is displaceable in an axially parallel direction on the rotational axis (6).

8. Machining unit according to claim 7,
**characterised in that**
the entrainment plate (13) is held by means of at least one compression-spring-tensioned tensile bolt (18) which is mounted in a vertical bore (19) which is open on the underneath in the rotational axis (6).

## Revendications

1. Unité d'usinage avec une suspension flottante dans la direction verticale sur une machine de traitement du bois commandée par programme, qui présente une broche de travail verticale (3) et, à proximité du porte-outil (4) de celle-ci, un palpeur par l'intermédiaire duquel ladite unité d'usinage s'appuie, avec une pression de palpage sur la face supérieure des pièces (60) à traiter, qui sont fixées sur une table de traitement, et qui, lors du traitement de chants et / ou de surfaces supérieures, est asservie à des tolérances de hauteur des pièces,
**caractérisée en ce que**,
dans la région du porte-outil (4), coaxialement par rapport à la broche de travail (3), est disposé un axe de rotation (6) entraîné séparément, avec des dispositifs de réception pour des instruments d'adaptation nécessaires (9) qui exigent un entraînement en rotation et en pivotement, et **en ce que**, sur cet axe de rotation (6), est articulé, en tant que dispositif de contact, un doigt palpeur (12) qui peut être pivoté d'une position de pivotement en saillie vers le bas, à une position latéralement éloignée du porte-outil (4) de la broche de travail (3) .

2. Unité d'usinage selon la revendication 1,
**caractérisée en ce que**
l'axe de rotation (6) est monté dans un flasque de réception (7) annulaire, auquel est axialement agencée une bague de réglage (10) déplaçable vers le bas, sur laquelle s'appuie de manière élastique le doigt palpeur (12) et dont le mouvement de levée commande le doigt palpeur (12) de telle manière que ledit doigt palpeur (12) est écarté, latéralement, dans la position finale supérieure de la bague de réglage (10), et pivoté vers le bas, dans la position finale inférieure.

3. Unité d'usinage selon la revendication 2,
**caractérisée en ce que**
la bague de réglage (10) est reliée avec le flasque de réception (7) au moyen de broches de levée (11), qui peuvent être entraînées par un servomoteur (14) qui est agencé sur le flasque de réception (7).

4. Unité d'usinage selon revendication 2 ou 3,
**caractérisée en ce que**
le doigt de contact (12) forme l'un des bras d'un levier (15) à deux bras, coudé en forme de L, dont le deuxième bras (16) est maintenu contre la face inférieure de la bague de réglage (22) au moyen d'un ressort.

5. Unité d'usinage selon la revendication.4,
**caractérisée en ce que**,
sur l'axe de rotation (6), est fixée une patte d'entraînement (13) s'étendant dans la direction radiale, à l'extrémité extérieure de laquelle est articulé le levier en forme de L (15) au moyen d'un axe d'articulation (17) qui le traverse dans la région de son coude.

6. Unité d'usinage selon l'une des revendications 2 à 5,
**caractérisée en ce que**
le point d'articulation du doigt de contact (12) sur l'axe de rotation (6) est entraîné, à partir du point de la course de la bague de réglage (10) vers le bas, pour lequel ledit doigt de contact (12) a atteint la position finale pivotée vers le bas, au cours du parcours suivant de ladite bague de réglage (10) jusqu'à sa position finale inférieure et que le retour s'effectue de manière correspondante.

7. Unité d'usinage selon revendication 2 ou 3,
**caractérisée en ce que**
la patte d'entraînement (13) peut être déplacée sur l'axe de rotation (6) dans la direction parallèle à l' axe .

8. Unité d'usinage selon revendication 2 ou 3,
**caractérisée en ce que**
la patte d'entraînement (13) est maintenue au moyen d'au moins un boulon de traction (18) chargé par ressort de pression, qui est agencé dans un alésage vertical (19), ouvert en bas, de l'axe de rotation (6).
